# EUROPÄISCHE PATENTSCHRIFT

(11) **EP 1 226 453 B1**
(45) Veröffentlichungstag und Bekanntmachung des Hinweises auf die Patenterteilung: **09.07.2003**
(21) Anmeldenummer: 00967605.7
(22) Anmeldetag: 21.09.2000
(51) Int. Cl.: G01S 7/40, G01S 7/497

(54) **VERFAHREN UND VORRICHTUNG ZUR ZUSTANDSERKENNUNG BEI EINEM SYSTEM ZUR AUTOMATISCHEN LÄNGS- UND/ODER QUERREGELUNG BEI EINEM KRAFTFAHRZEUG**
METHOD AND DEVICE FOR IDENTIFYING THE STATE OF A SYSTEM FOR EFFECTING THE AUTOMATIC LONGITUDINAL AND/OR LATERAL CONTROL OF A MOTOR VEHICLE
PROCEDE ET DISPOSITIF DE RECONNAISSANCE D'ETAT DANS UN SYSTEME DE REGULATION LONGITUDINALE ET/OU TRANSVERSALE MONTE DANS UN VEHICULE AUTOMOBILE

(30) Priorität: 21.09.1999 DE 19945268
(43) Veröffentlichungstag der Anmeldung: 31.07.2002
(73) Patentinhaber: ROBERT BOSCH GMBH, 70442 Stuttgart (DE)
(72) Erfinder: WINTER, Klaus, 71701 Schwieberdingen (DE); LEHRE, Klaus, 76316 Malsch (DE); FILLHARDT, Christiane, 77746 Schutterwald (DE); MARCHTHALER, Reiner, 73333 Gingen (DE)
(86) Internationale Anmeldenummer: DE0003287
(87) Internationale Veröffentlichungsnummer: WO01022114

(56) Entgegenhaltungen:
- EP-A- 1 026 514
- DE-A- 19 644 164
- DE-A- 19 832 800
- DE-A- 19 929 794
- US-A- 5 839 096

## Beschreibung

Die vorliegende Erfindung betrifft ein Verfahren und eine Vorrichtung zur Zustandserkennung bei einem System zur automatischen Längs- und/oder Querregelung bei einem Kraftfahrzeug. Solche Systeme werden beispielsweise im Rahmen einer automatischen Geschwindigkeitsregelung eines Fahrzeugs zur Detektion vorausfahrender Fahrzeuge eingesetzt. Bei diesen Systemen (z.B. Adaptive Cruise Control) wird die herkömmliche Geschwindigkeitsregelung um einen Abstandssensor erweitert, so daß eine automatische Geschwindigkeits- und/oder Abstandsanpassung an die vorausliegende Verkehrssituation möglich ist. Um bei einem solchen System einen zuverlässigen Einsatz zu gewährleisten, wird die Funktion des Systems in der Regel überwacht.

### Stand der Technik

Aus der DE 196 44 164 A1 ist ein Kraftfahrzeugradarsystem bekannt, bei dem sich zum Schutz vor Witterungseinflüssen und vorzugsweise auch zur Fokussierung ein dielektrischer Körper im Strahlengang der elektromagnetischen Wellen befindet. Um Schmutz und Belege aus Eis, Schnee oder Feuchtigkeit, die sich auf diesem dielektrischen Körper ablagern, zu detektieren und gegebenenfalls zu beseitigen, besitzt der dielektrische Körper eine Anordnung aus elektrisch leitfähigen Bahnen. Mit ihnen kann der dielektrische Körper beheizt werden, es kann die Dämpfung eines möglichen Belages gemessen werden und es kann eine Zielsimulation zur Funktionsüberprüfung des Radarsystems durchgeführt werden. Zur Messung eines Belages aus Eis, Schnee oder Feuchtigkeit ist bei diesem Kraftfahrzeugradarsystem der dielektrische Körper von zwei kammerförmigen Anordnungen, die eng ineinander verzahnt sind, sich dabei jedoch nicht berühren, überdeckt. Jede der kammerförmigen Anordnungen ist für sich eine elektrisch zusammenhängende Struktur. Zwischen diesen beiden verzahnten Anordnungen kann ein Widerstand R und eine Kapazität C gemessen werden. Diese hängen vom Verlustwinkel tan δ des Materials zwischen den beiden Anordnungen und damit auch von dem Verlustwinkel tan δ eines gegebenenfalls vorhandenen Belags ab. Auf diese Weise kann die Signaldämpfung eines Belages und damit der Grad einer Verschmutzung bestimmt werden. Zur Durchführung dieser Belagsmessung muß die elektrisch leitfähige Anordnung auf der Außenseite des dielektrischen Körpers aufgebracht sein.

Aus der US 5 839 096 A und aus der DE 198 32 800 A1 sind jeweils Verfahren bzw. Vorrichtungen gemäß dem Oberbegriff der Ansprüche 1 und 15 bekannt.

### Aufgabe, Lösung und Vorteile der Erfindung

Aufgabe der vorliegenden Erfindung ist es, ein Verfahren und eine Vorrichtung zur Zustandserkennung bei einem System zur automatischen Längs- und/oder Querregelung bei einem Kraftfahrzeug anzugeben, das eine Verschmutzung und/oder Blindheit eines Sensors zuverlässig, schnell, kostengünstig und möglichst ohne zusätzliche Hardwarekomponenten bestimmt.

Erfindungsgemäß wird diese Aufgabe dadurch gelöst, daß bei einem Verfahren zur Zustandserkennung bei einem System zur automatischen Längs- und/oder Querregelung bei einem Kraftfahrzeug, arbeitend nach dem Radarprinzip und/oder dem Lidarprinzip, insbesondere zur Verschmutzungs- und/oder Blindheitserkennung eines Sensors, die Zustandserkennung von wenigstens zwei Indikatoren (Iₙ) abhängig ist, die aus den von dem Sensor empfangenen und/oder ausgesendeten Signalen gebildet werden.

Diese Lösung bietet den Vorteil, daß zur Verschmutzungsund/oder Blindheitserkennung eines Sensors keine zusätzlichen Hardwarekomponenten, insbesondere keine zusätzlichen elektrisch leitfähigen Bahnen auf der Außenseite des Sensors, notwendig sind. Dies ist eine kostengünstige Umsetzung des erfindungsgemäßen Verfahrens. Vielmehr wird die Lösung der Aufgabe durch wenigstens zwei Indikatoren (Iₙ) herbeigeführt, die unmittelbar aus den von dem Sensor empfangenen und/oder ausgesendeten Signalen gebildet werden. Somit ist eine schnelle und zuverlässige Verschmutzungs- und/oder Blindheitserkennung eines Sensors unmittelbar möglich, wenn das System mit dem Sensor in Betrieb genommen wird und wenige Messungen vorgenommen worden sind, die auswertbare Ergebnisse liefern.

Vorteilhafterweise werden die wenigstens zwei Indikatoren (Iₙ) mit Wichtungsfaktoren (aₙ) gewichtet. Dies bietet den Vorteil, daß die Indikatoren (Iₙ) entsprechend ihrer unterschiedlichen Bedeutung für den Zustand des Systems gewichtet werden.

Besonders vorteilhaft ist es, die gewichteten Indikatoren miteinander zu verknüpfen. Dies bietet den Vorteil, daß auf diese Weise ein verknüpfter Indikator gebildet wird, der bezüglich der genannten Aufgabe eine größere Aussagekraft hat, als ein einzelner Indikator (Iₙ).

Für die Überschaubar- und Vergleichbarkeit der sich ergebenden Daten ist es vorteilhaft, daß die Summe der Wichtungsfaktoren (aₙ) nicht größer als 1 ist.

Besonders vorteilhaft ist es, daß die Wichtungsfaktoren (aₙ) wenigstens von einer Fahrsituation (Fₙ) und/oder von einer zu bestimmenden Wahrscheinlichkeit (Vₙ) abhängig sind. Dies bietet den Vorteil, daß das erfindungsgemäße Verfahren flexibel an verschiedene Fahrsituationen (Fₙ) und/oder zu bestimmende Wahrscheinlichkeiten (Vₙ) angepaßt werden kann. Vorteilhaft ist es hierbei, wenigstens eine der folgenden Fahrsituationen (Fₙ) bei der Bestimmung des Zustands (P) des Systems zu berücksichtigen:
1. Das System detektiert ein anderes Kraftfahrzeug, das als Zielobjekt für die Regelung verwendet wird.
2. Das System detektiert kein mögliches Zielobjekt, aber das System detektiert andere bewegte Objekte.
3. Das System detektiert weder ein mögliches Zielobjekt noch andere bewegte Objekte.

Durch die Berücksichtigung wenigstens einer der zuvor genannten Fahrsituationen (Fₙ) kann eine Klassifizierung der Fahrsituationen (Fₙ) vorgenommen werden, wie sie typischerweise von einem System der gattungsgemäßen Art unterschieden werden kann.

Als zu bestimmende Wahrscheinlichkeiten (Vₙ) wird bei dem erfindungsgemäßen Verfahren wenigstens eine der folgenden Wahrscheinlichkeiten (Vₙ) ausgewählt:
1. Das System liefert optimale Performance.
2. Die Performance des Systems ist nicht optimal.
3. Es ist keine Funktion des Systems möglich.

Durch die Bestimmung wenigstens einer der zuvor genannten Wahrscheinlichkeiten (Vₙ) wird vorteilhafterweise eine Wahrscheinlichkeit (Vₙ) bestimmt, die den Zustand (P) des Systems eindeutig beschreibt.

Demzufolge ist es besonders vorteilhaft, daß die verknüpften Indikatoren wenigstens eine Wahrscheinlichkeit (Vₙ) ergeben, die eine Aussage über den wahrscheinlichen Zustand (P) des Systems macht. Vorteilhafterweise ist das Verfahren so ausgerichtet, daß die größte der Wahrscheinlichkeiten (Vₙ) den Zustand (P) des Systems beschreibt. Auf diese Weise ergibt sich ein Zustand (P) des Systems, der in einer einzigen Größe eine Aussage über den wahrscheinlichen Zustand (P) des Systems liefert.

Es ist weiterhin vorteilhaft, das im Rahmen des erfindungsgemäßen Verfahrens die Indikatoren (Iₙ) so normiert werden, daß sich der mögliche Wertebereich zwischen 0 und 1 bewegt. Dies bietet den Vorteil, daß die Indikatoren (Iₙ) sich alle in ein und demselben Wertebereich befinden und somit ein Vergleich beziehungsweise eine Bewertung der einzelnen Indikatoren (Iₙ) erleichtert wird. Insbesonders in Zusammenhang mit der zuvor genannten Auslegung der Wichtungsfaktoren (aₙ) derart, daß die Summe der Wichtungsfaktoren (aₙ) nicht größer als 1 ist, bietet dies die Möglichkeit, daß sich auch die resultierenden Wahrscheinlichkeiten in einem möglichen Wertebereich zwischen 0 und 1 bewegen und somit unmittelbar eine Wahrscheinlichkeit (Vₙ) des Systems angeben.

Besonders vorteilhaft ist, daß bei dem erfindungsgemäßen Verfahren wenigstens einer der folgenden Indikatoren (Iₙ) verwendet wird:
1. Die mittlere Winkelgüte aller von dem System detektierten Objekte, die eine Aussage über die Qualität der bestimmten Objektwinkel macht.
2. Die Objektstabilität, die die Rate von Detektionsausfällen des für die Fahrzeuglängsregelung ausgewählten Ziel- beziehungsweise Regelobjekts beschreibt.
3. Die mittlere Leistung der von dem Sensor empfangenen Signale.
4. Die Summe aller von dem System während einer Messung detektierten Objekte.
5. Die Verknüpfung von Abstand und Amplitude des am weitesten entfernt detektierten Objekts.
6. Die vom System detektierten Straßenreflektionen.

Die zuvor genannten Indikatoren (Iₙ) bieten den Vorteil, daß sie je nach unterschiedlicher Fahrsituation (Fₙ) unterschiedlich stark ausgeprägt sind. Hierdurch ist es möglich, in nahezu jeder Fahrsituation (Fₙ) eine Aussage über den wahrscheinlichen Zustand (P) des Systems zu machen.

Weiterhin hat es sich als vorteilhaft bei dem erfindungsgemäßen Verfahren erwiesen, daß ein Zustand (P) erst dann als bestimmt angenommen wird, wenn sich das Ergebnis der verknüpften Indikatoren wenigstens für eine vorbestimmte Zeitdauer (T) ergibt. Dies bietet den Vorteil, daß sich, zum Beispiel aufgrund von äußeren Einflüssen, kurzzeitige Änderungen der Wahrscheinlichkeiten (Vₙ) nicht unmittelbar auf den als bestimmt angenommenen Zustand (P) auswirken.

Es ist vorteilhaft, daß zwischen den Wahrscheinlichkeiten (Vₙ) Übergangszustände existieren, die ebenfalls zur Auswertung herangezogen werden. Für den Fall, daß es zu einem Übergangszustand zwischen zwei Wahrscheinlichkeiten (Vₙ) kommt, können die sich hierdurch ergebenen Daten ebenfalls zur Auswertung genutzt werden.

Ein besonderer Vorteil des erfindungsgemäßen Verfahrens ist es, daß der bestimmte Zustand (P) des Systems in eine Steuerung einfließt, die wiederum eine Reinigungseinrichtung für den Sensor ansteuert. Diese Reinigungseinrichtung ist vorteilhafterweise wenigstens eine mit Wasser arbeitende Vorrichtung, eine mechanische Reinigungsvorrichtung oder eine Heizung für den Sensor. Dieser Einfluß auf die Steuerung einer Reinigungseinrichtung für den Sensor bietet den Vorteil, daß die Reinigung des Sensors optimiert wird. Auf diese Weise kann zum Beispiel die Reinigungseinrichtung für den Sensor angesteuert werden, in Fällen, in denen die Steuerung die Reinigungseinrichtung für den Sensor sonst nicht angesteuert hätte.

### Beschreibung eines Ausführungsbeispiels

Nachfolgend wird ein Ausführungsbeispiel der Erfindung anhand von Zeichnungen erläutert. Es zeigen
- Figur 1: ein Kraftfahrzeugradarsystem, in das das erfindungsgemäße Verfahren integriert ist,
- Figur 2: eine schematische Darstellung zum Ablauf des erfindungsgemäßen Verfahrens,
- Figur 3: eine beispielhafte Darstellung sich ergebender Übergangszustände und
- Figur 4: eine mögliche Anordnung, um den bestimmten Zustand (P) des Systems in eine Steuerung einfließen zu lassen, die wiederum eine Reinigungseinrichtung für den Sensor ansteuert.

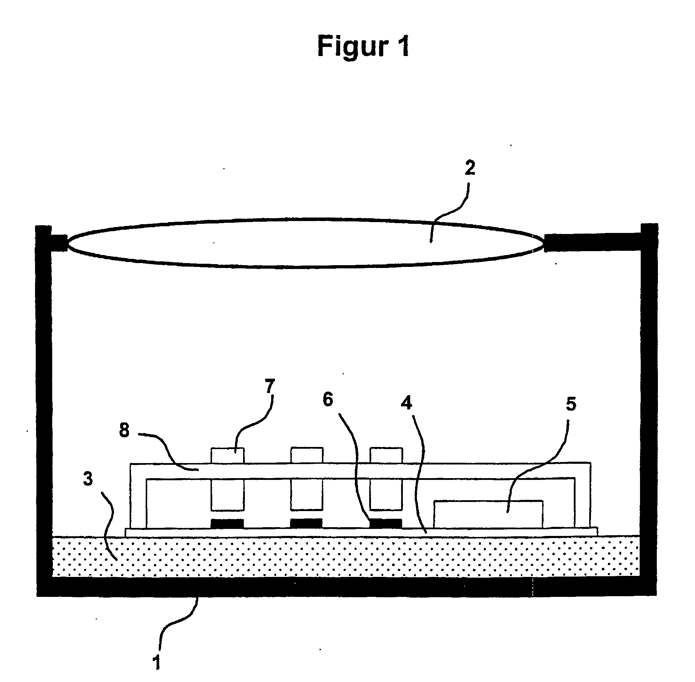

Figur 1 zeigt ein Kraftfahrzeugradarsystem mit einem Gehäuse 1 und einem fokussierenden Mittel 2, das beispielsweise eine dielektrische Linse in jeglicher Ausführungsform sein kein. In dem Gehäuse 1 befindet sich eine Grundplatte 3, auf der sich wiederum eine Leiterplatte 4 befindet. Auf der Leiterplatte 4 sind unter anderem elektronische Bauteile 5 aufgebracht, die unter anderem die erfindungsgemäße Vorrichtung zur Zustandserkennung bei einem System zur automatischen Längs- und/oder Querregelung bei einem Kraftfahrzeug beinhalten. Auf der Leiterplatte 4 sind weiterhin Strahlerelemente 6 aufgebracht, die beispielsweise als Patchantennenelemente ausgeführt sein können. Über diese Strahlerelemente 6 wird die hochfrequente Mikrowellenstrahlung ausgesendet und/oder empfangen. Die Strahlung wird dabei durch vorfokussierende Mittel 7 vorfokussiert, bevor sie durch das fokussierende Mittel 2 endgültig fokussiert wird. In Empfangsrichtung ist die Reihenfolge entsprechend umgekehrt. Die vorfokussierenden Mittel 7 werden von einer Abdeckung 8 in ihre Position oberhalb der Strahlerelemente 6 gehalten.

Es liegt weiterhin im Rahmen des erfindungsgemäßen Verfahrens, daß dieses bei einem Radarsystem jeglicher Art, entweder basierend auf elektromagnetischer Mikrowellenstrahlung und/oder basierend auf dem Lidarprinzip, angewendet wird.

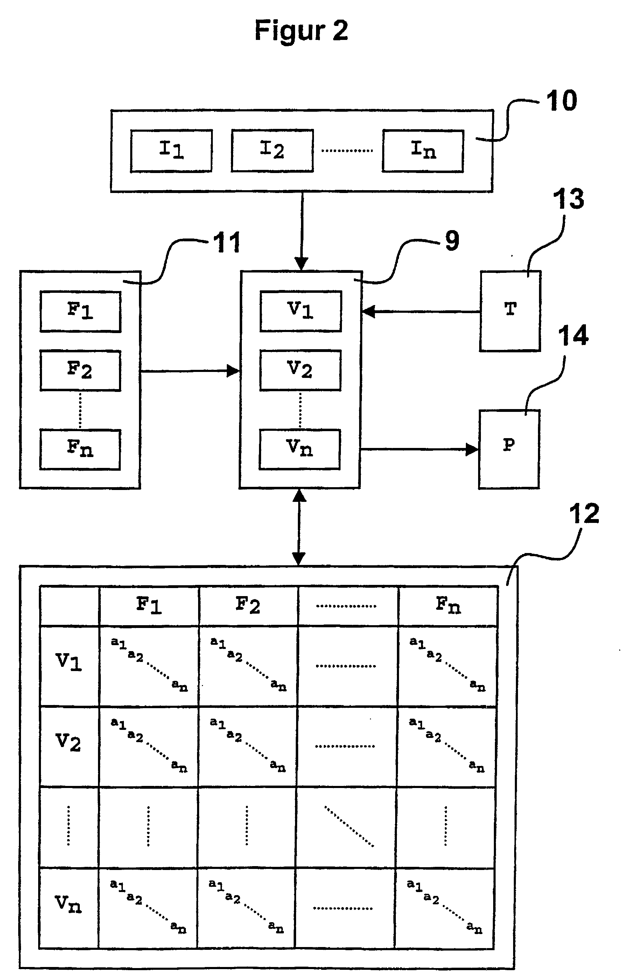

Figur 2 zeigt eine schematische Darstellung zum Ablauf des erfindungsgemäßen Verfahrens. In einer Zustandsbestimmungseinheit 9 werden im allgemeinen Fall n Wahrscheinlichkeiten (Vₙ) bestimmt.

Die zu bestimmenden Wahrscheinlichkeiten (Vₙ) dienen dazu, den wahrscheinlichen Zustand (P) des Systems zu bestimmen.

Als zu bestimmende Wahrscheinlichkeiten (Vₙ), von denen dann beispielsweise die größte als möglicher Zustand (P) des Systems bestimmt wird, können im Rahmen dieses Ausführungsbeispiels beispielsweise die folgenden verwendet werden:
1. Das System liefert optimale Performance (V₁). Dies kann beispielsweise bedeuten, daß der Sensor des System frei von jeglicher Verschmutzung ist.
2. Die Performance des Systems ist nicht optimal (V₂). Dies kann beispielsweise bedeuten, daß der Sensor des Systems verschmutzt ist.
3. Es ist keine Funktion des Systems möglich (V₃). Dies kann beispielsweise bedeuten, daß der Sensor des Systems blind ist.

Diese Festlegung der zu bestimmten Wahrscheinlichkeiten (Vₙ) entspricht dem hier vorgestellten Ausführungsbeispiel. Es ist selbstverständlich möglich, die Anzahl der zu bestimmenden Wahrscheinlichkeiten (Vₙ) weiter einzugrenzen oder zu erweitern. Dies hängt in erster Linie davon ab, wozu das bestimmte Zustandssignal (P) im weiteren verwendet werden soll, ob es dabei eher auf eine qualitative Aussage (Funktion/keine Funktion) oder auf eine quantitative Aussage (exakter Zustandswert) ankommt.

Zur Bestimmung der Wahrscheinlichkeiten (Vₙ) werden der Zustandsbestimmungseinheit 9 Indikatoren (Iₙ) 10 zur Verfügung gestellt, auf die im weiteren noch detaillierter eingegangen wird. Die Anzahl der Indikatoren (Iₙ) ist in diesem Ausführungsbeispiel allgemein mit n angenommen. Der Zustandsbestimmungseinheit 9 wird weiterhin die aktuelle Fahrsituation/Fahrzustand (Fₙ) 11 übermittelt. In diesem Ausführungsbeispiel sind allgemein n verschiedene Fahrsituationen (Fₙ) angedeutet. Auf die möglichen Fahrsituationen (Fₙ) wird ebenfalls im folgenden noch detaillierter eingegangen. Je nach dem welche Wahrscheinlichkeit (Vₙ) in der Zustandsbestimmungseinheit 9 aktuell bestimmt werden soll und je nach derzeitiger Fahrsituation (Fₙ) 11 werden die entsprechenden Wichtungsfaktoren (a₁ bis aₙ) aus einer Wichtungsfaktorentabelle 12 ausgewählt. Diese Wichtungsfaktorentabelle 12 enthält für jede mögliche Kombination aus zu bestimmender Wahrscheinlichkeit (Vₙ) und möglicher Fahrsituation (Fₙ) die jeweils zugehörigen entsprechend angepaßten Wichtungsfaktoren (a₁ bis aₙ). Die entsprechend ausgewählten Wichtungsfaktoren (a₁ bis aₙ) werden in der Zustandsbestimmungseinheit 9 mit den entsprechenden Indikatoren (Iₙ) multipliziert. Die auf diese Weise gewichteten Indikatoren werden in der Zustandsbestimmungseinheit 9 aufsummiert und ergeben die zu bestimmende Wahrscheinlichkeit (Vₙ). Allgemein ist zur Verknüpfung der Indikatoren (Iₙ) und der Wichtungsfaktoren (a₁ bis aₙ) jede beliebige Verknüpfungsform möglich, die zu einem aussagekräftigen Ergebnis führt. Dieser Vorgang wird für jede zu bestimmende Wahrscheinlichkeit (Vₙ) wiederholt. Dadurch, daß sowohl die Indikatoren als auch die Wichtungsfaktoren (aₙ) auf einen Wertebereich zwischen 0 und 1 normiert sind, ergeben sich in der Summe Wahrscheinlichkeiten (Vₙ), die ebenfalls im Wertebereich zwischen 0 und 1 liegen. Im Fall der Indikatoren (Iₙ) bedeutet dabei eine 0 eine vollständige Verschmutzung/Blindheit und eine 1 keine Verschmutzung des Sensors. Im Fall der zu bestimmenden Wahrscheinlichkeiten (Vₙ) bedeutet eine 1, daß der Sensor zu 100% frei ist, und eine 0, daß der Sensor zu 0% frei ist. Nachdem von der Zustandsbestimmungseinheit 9 alle zu bestimmenden Wahrscheinlichkeiten (Vₙ) bestimmt worden sind, wird diejenige Wahrscheinlichkeit (Vₙ) ausgewählt, die am größten ist. Insbesondere dann, wenn die auf diese Weise bestimmte Wahrscheinlichkeit (Vₙ) einen schlechten Zustand (P) des Systems signalisiert, wird unter Verwendung eines Zeitgliedes 13 zunächst überprüft, ob die bestimmte Wahrscheinlichkeit wenigstens für einen Zeitraum (T), entsprechend des Zeitgliedes 13, die größte der zu bestimmenden Wahrscheinlichkeiten (Vₙ) ist. Ist dies der Fall, daß also eine der zu bestimmenden Wahrscheinlichkeiten (Vₙ) für wenigstens einen Zeitraum (T) die größte der zu bestimmenden Wahrscheinlichkeiten (Vₙ) war, so wird diese Wahrscheinlichkeit (Vₙ) als wahrscheinlicher Zustand (P) des Systems ausgewählt und als Zustand (P) des Sensors 14 zur weiteren Verarbeitung zur Verfügung gestellt.

Der Vorteil bei der Verwendung von Wichtungsfaktoren (aₙ) liegt in ganz besonderer Weise darin, daß eine Anpassung an nahezu jede mögliche Fahrsituation (Fₙ) und/oder zu bestimmender Wahrscheinlichkeit (Vₙ) vorgenommen werden kann. Dabei ist die Anzahl der in der Tabelle abzulegenden Wichtungsfaktoren von der Anzahl der unterschiedenen Fahrsituationen, der Anzahl der unterschiedlichen zu bestimmenden Wahrscheinlichkeiten und der Anzahl der verwendeten Indikatoren abhängig. Im einfachsten Fall mit 2 Fahrsituationen, eine zu bestimmende Wahrscheinlichkeit und 2 Indikatoren sind somit insgesamt 2 x 1 x 2 = 4 Wichtungsfaktoren notwendig. Bei einer komplexeren Ausführung mit beispielsweise 3 Fahrsituationen, 3 zu bestimmenden Wahrscheinlichkeiten und 6 Indikatoren sind dann insgesamt 3 x 3 x 6 = 54 Wichtungsfaktoren notwendig. Die Auswahl der zum Einsatz kommenden Kombination hängt von vielen Faktoren wie beispielsweise dem verwendeten Sensorsystem oder die geforderten Genauigkeit und Vielseitigkeit ab, und ist dem Ermessen des Fachmanns überlassen.

Die zuvor bereits genannten Fahrsituationen (Fₙ) sollten jeweils adaptiv an das zur Verfügung stehende Sensorsystem angepaßt werden. Je nachdem wie empfindlich der Sensor ist beziehungsweise wie viele und welche Fahrsituationen (Fₙ) mit dem Sensor unterschieden werden können, sollte die Festlegung der zu berücksichtigenden Fahrsituationen erfolgen. Die wichtigste in jedem Fall zu berücksichtigende Fahrsituation ist, daß das System ein anderes Fahrzeug detektiert, das als Regelobjekt für eine Längs- und/oder Querregelung ausgewählt wird. Diese Fahrsituation (Fₙ) zu berücksichtigen ist deswegen derart relevant, weil ein System zur automatischen Längs- und/oder Querregelung bei einem Kraftfahrzeug in dem Modus, in dem es ein Zielobjekt für die Regelung ausgewählt hat, in der Regel die zuverlässigsten und genauesten Daten liefert. Als weitere zu berücksichtigende Fahrsituation (Fₙ) bietet sich die Fahrsituation (Fₙ) an, in der das System kein mögliches Objekt für eine Regelung detektiert, wohl aber andere bewegte Objekte/Zielobjekte. Dies können beispielsweise entgegenkommende Fahrzeuge, bewegte Objekte am Fahrbahnrand oder vorausfahrende Fahrzeuge/Zielobjekte, die nicht als Regelobjekt ausgewählt sind (weil sie beispielsweise in einer anderen Fahrspur fahren), sein. Möglich ist weiterhin die Fahrsituation (Fₙ), daß das System weder ein mögliches Zielobjekt für eine Regelung noch andere bewegte Objekte/Zielobjekte detektiert. Im Rahmen der vorliegenden Erfindung sind all diejenigen Fahrsituationen (Fₙ) denkbar, die von dem System unterschieden werden können.

Einer der wichtigsten Punkte für die Zuverlässigkeit des erfindungsgemäßen Verfahrens ist die Auswahl der verwendeten Indikatoren (Iₙ), die zusammen mit den Wichtungsfaktoren (aₙ) die Berechnungsgrundlage des Verfahrens darstellen. Im Rahmen dieses Ausführungsbeispiels werden nun im folgenden sechs mögliche Indikatoren (Iₙ) vorgestellt. Denkbar wären jedoch auch weitere Indikatoren (Iₙ), die aus den von dem Sensor empfangenen und/oder ausgesendeten Signalen gebildet werden können. Wichtigstes Kriterium eines solchen Indikators (Iₙ) ist, daß er sich wenigstens in Abhängigkeit vom Zustand (P) des Sensors verändert.

Ein erster möglicher Indikator (Iₙ) ist die mittlere Winkelgüte aller von dem System detektierten Objekte. Die Winkelgüte kann beispielsweise aus dem Quotienten von realem Objektwinkel und der Differenz aus realem und gemessenem Objektwinkel bestimmt werden. Um einen aussagekräftigen Indikator (Iₙ) zu erhalten, der eine Aussage über die Qualität der bestimmten Objektwinkel macht, wird die Winkelgüte aller detektierten Objekte gemittelt. Um diesen Indikator (Iₙ) mit den weiteren noch folgenden Indikatoren (Iₙ) untereinander vergleichbar beziehungsweise verknüpfbar zu machen, wird der Indikator (Iₙ) auf einen Wertebereich zwischen 0 und 1 normiert. Bei einem auf elektromagnetischer Mikrowellenstrahlung basierenden Radarsystem empfiehlt es sich, die Winkelgüten nur in einem Bereich zu betrachten, in dem generell hohe Güten erwartet werden. Dies ist beispielsweise bei einem Radarsystem zur automatischen Fahrgeschwindigkeits- und Abstandsregelung ein Winkelbereich von ca. ± 3°. Bricht dann in diesem Winkelbereich die mittlere Winkelgüte ein, so kann mit hoher Wahrscheinlichkeit von einer Verschmutzung und/oder Blindheit des Sensorsystems ausgegangen werden. Detektiert das Sensorsystem keine Objekte, zum Beispiel wegen totaler Erblindung oder absoluter Freifahrt, so verliert dieser Indikator (Iₙ) an Bedeutung. Die unterschiedliche Bedeutung eines Indikators (Iₙ) wird in dem erfindungsgemäßen Verfahren durch an die entsprechende Fahrsituation (Fₙ) angepaßte Wichtungsfaktoren (aₙ) erreicht. Auf diese Weise werden bei dem erfindungsgemäßen Verfahren in jeder Fahrsituation (Fₙ) gerade die Indikatoren (Iₙ) stärker gewichtet, die speziell in der Fahrsituation (Fₙ) eine hohe Aussagekraft haben. Bei dem hier vorliegenden Indikator (Iₙ) der mittleren Winkelgüte aller von dem System detektierten Objekte ist dies beispielsweise die Fahrsituation (Fₙ), in der das System ein vorausfahrendes Fahrzeug/Zielobjekt als Objekt für eine Regelung ausgewählt hat (geregelte Folgefahrt).

Ein weiterer möglicher Indikator (Iₙ) ist die Objektstabilität, die die Rate von Detektionsausfällen des für die Fahrzeuglängsregelung ausgewählten Zielbeziehungsweise Regelobjekts beschreibt. Wenn beispielsweise ein System zur automatischen Geschwindigkeits- und Abstandsregelung in einem Kraftfahrzeug ein vorausfahrendes Kraftfahrzeug als Regelobjekt ausgewählt hat, so wird ein sogenanntes Tracking durchgeführt. Bei diesem Tracking werden in jedem Zeitabschnitt die vom Sensorsystem ermittelten Daten mit denen verglichen, die in den Zeitschritten zuvor detektiert worden sind. Auf diese Art und Weise kann im Speicher des Systems für jedes der detektierten Objekte eine Art virtueller Track abgelegt werden. Hierbei kommt es in der Regel vor, daß selbst das ausgewählte Regelobjekt nicht in jedem Zeitschritt detektiert wird. Hierdurch entstehen Detektionslücken in dem virtuellen Track. Die Objektstabilität kann nun aus dem Quotienten der Anzahl der Zeitschritte, in denen ein Objekt detektiert wurde, und der gesamten Anzahl der Zeitschritte, in denen das Objekt beobachtet wurde, bestimmt werden. Auch dieser Indikator (Iₙ) wird auf einen Wertebereich zwischen 0 und 1 normiert, um ihn mit den weiteren Indikatoren vergleichbar zu machen. Wird dieser Indikator (Iₙ) gefiltert, normiert und über eine längere Zeit betrachtet, so ist er insbesondere dann wenn ein vorausfahrendes Regelobjekt vorhanden ist, bzw. ein Zielobjekt für die Regelung ausgewählt worden ist, sehr empfindlich gegenüber einem veränderten Systemzustand, da im allgemeinen in dieser Fahrsituation (Fₙ) eine sehr hohe Objektstabilität erwartet wird. Gerade diese Situation, in der das eigene Kraftfahrzeug hinter einem vorausfahrenden Regelobjekt fährt, ist eine der Situationen, in denen sich der Zustand (P) des Systems häufig stark verschlechtert. Dies kann beispielsweise dadurch geschehen, daß von dem vorausfahrenden Regelobjekt Schmutz, Schnee oder Schneematsch aufgewirbelt wird und den Sensor des eigenen Systems zur automatischen Fahrgeschwindigkeits- und/oder Abstandsregelung verschmutzt. Aus diesem Grund wird der Indikator Objektstabilität insbesondere in der Fahrsituation (Fₙ) in der ein Zielobjekt für eine Regelung verwendet wird, sehr hoch gewichtet.

Ein weiterer möglicher Indikator (Iₙ) ist die mittlere Leistung der von dem Sensor empfangenen Signale. Wird von einem Sensor viel Leistung empfangen, so kann diese beispielsweise von einzelnen starken oder auch von vielen schwachen Zielen herrühren. Sind hingegen keine Ziele vorhanden oder ist der Sensor verschmutzt und/oder erblindet, so wird entsprechend wenig Leistung vom Sensor empfangen. Zur Berechnung des Indikators (Iₙ) werden die Leistungen aller detektierten Peaks im Spektrum der empfangenen Signale aufaddiert und ein Mittelwert gebildet. Im Anschluß empfiehlt es sich auch diesen Indikator (Iₙ) auf einen Wert zwischen 0 und 1 zu normieren, um einen Vergleich mit den anderen Indikatoren (Iₙ) zu ermöglichen. Dieser Indikator (Iₙ) ist insbesondere dann von großer Bedeutung, wenn die totale Erblindung des Sensors festgestellt werden soll und in Fahrsituationen (Fₙ), in denen kein Zielobjekt für eine Regelung ausgewählt worden ist, jedoch noch andere Zielobjekte detektiert werden. Somit wird dieser Indikator (Iₙ) bei der Bestimmung der entsprechenden Wahrscheinlichkeiten (Vₙ) entsprechend hoch gewichtet (aₙ).

Ein weiterer möglicher Indikator (Iₙ) ist die Summe alle von dem System während einer Messung detektierten Objekte. Auch bei diesem Indikator (Iₙ) empfiehlt sich eine Normierung in einem Wertebereich zwischen 0 und 1. Dieser Indikator (Iₙ) hat insbesondere bei der Bewertung der totalen Blindheit des Sensors und in Fahrsituationen (Fₙ), in denen kein Zielobjekt für eine Regelung ausgewählt worden ist, jedoch noch andere Zielobjekte detektiert werden, hohe Bedeutung. Somit wird dieser Indikator (Iₙ) bei der Bestimmung der entsprechenden Wahrscheinlichkeiten (Vₙ) entsprechend hoch gewichtet (aₙ).

Ein weiterer möglicher Indikator (Iₙ) ist die Verknüpfung von Abstand und Amplitude des am weitesten entfernt detektierten Objekts. Hierbei bestimmt das System zunächst den Abstand und die Amplitude des am weitesten entfernt detektierten Zielobjekts. Im Anschluß werden diese beiden Werte multipliziert, um eine von der Objektgeometrie unabhängige Größe zu erhalten. Nach entsprechender Normierung, vorzugsweise in einen Wertebereich zwischen 0 und 1, gibt dieser Indikator (Iₙ) insbesondere Auskunft über die maximale Reichweite des Sensor und die Signalstärke der detektierten Ziele. Unterschreitet dieser Indikator (Iₙ) über eine längere Zeit einen bestimmten Grenzwert, so kann auf Blindheit des Sensors geschlossen werden. Falls kein Zielobjekt detektiert wird, wird dieser Indikator (Iₙ) zu 0 gesetzt. Dieser Indikator (Iₙ) wird insbesondere dann hoch gewichtet (aₙ), wenn kein unmittelbares Regelobjekt, jedoch andere Zielobjekte detektiert werden.

Ein weiterer möglicher Indikator (Iₙ) sind die vom System detektierten Straßenreflektionen. Hierbei ist es dem Sensor möglich über seinen vertikalen Detektionsbereich Straßenreflektionen zu erkennen. Dieser Indikator (Iₙ) kann insbesondere dann zur Bewertung herangezogen werden, wenn keinerlei Ziel- und/oder Regelobjekte vorhanden sind. In diesen Fahrsituationen (Fₙ) wird dieser Indikator (Iₙ) entsprechend stark gewichtet (aₙ). Da die vom System detektierten Straßenreflektionen in der Regel nur sehr schwach detektiert werden, kann damit eine Verschmutzung und/oder Erblindung des Sensors sehr früh erkannt werden. Diese kann dadurch festgestellt werden, daß im Falle einer Verschmutzung und/oder Erblindung die schwachen Signale der vom System detektierten Straßenreflektionen nicht mehr im Spektrum aller detektierten Signale auftauchen. Auch bei diesem Indikator (Iₙ) bietet sich eine Normierung in einen Wertebereich zwischen 0 und 1 an, um ihn mit anderen Indikatoren (Iₙ) vergleichbar zu machen.

Im allgemeinen sind alle Indikatoren (Iₙ) mehr oder weniger von der Umgebungsstruktur abhängig. Diese Tatsache muß bei der Auswertung der entsprechenden Signale in jedem Fall berücksichtigt werden. Um beispielsweise diesen Einfluß aber auch um andere Einflüsse zu berücksichtigen, liegt es im Rahmen der Erfindung, daß zur Bestimmung der Indikatoren (Iₙ) die Signale gefiltert und/oder einer sonstigen Signalverarbeitung unterzogen werden. Die Normierung der Indikatoren (Iₙ) erfolgt vorzugsweise in einen Wertebereich zwischen 0 und 1, kann jedoch auch auf andere Weise vorgenommen werden.

Im allgemeinen kann das vorgestellte Verfahren an verschiedene Fahrzeuge und/oder Sensorsysteme und/oder Umgebungsstrukturen adaptiv angepaßt werden. Hierzu kann die Anzahl der verwendeten Indikatoren (Iₙ) erhöht oder verringert werden, die Art/Auswahl der Indikatoren (Iₙ) variiert werden, es können die zu unterscheidenden Fahrzustände (Fₙ) verändert werden, es können entsprechend andere Wahrscheinlichkeiten (Vₙ) bestimmt werden, es können entsprechend der verschiedenen bestimmten Wahrscheinlichkeiten (Vₙ) entsprechend verschiedene Zustände (P) für das System bestimmt werden und es können beispielsweise die Wichtungsfaktoren (aₙ) adaptiv an die verschiedenen Fahrzustände (Fₙ) und die zu bestimmenden Wahrscheinlichkeiten (Vₙ) angepaßt werden. Hierbei wird es dem Wissen des Fachmanns überlassen, das Verfahren in geeigneter Art und Weise anzupassen.

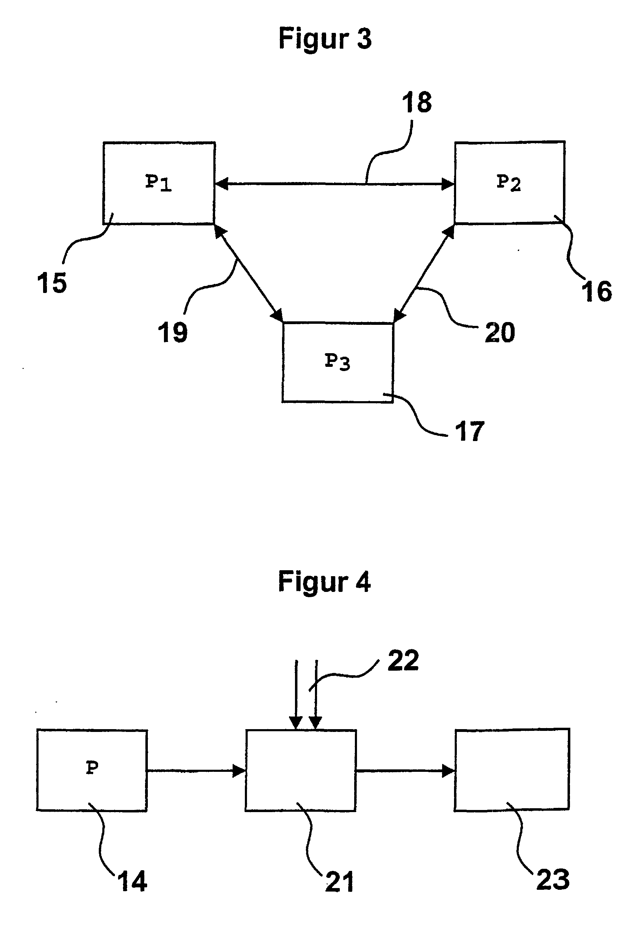

In Figur 3 werden mögliche Übergangszustände zwischen den Zuständen (P) dargestellt. Hierbei sind mit 15, 16 und 17 drei mögliche Zustände P₁, P₂ und P₃ gekennzeichnet. Mit den Pfeilen 18, 19 und 20 sind drei mögliche Übergangszustände zwischen den Zuständen P₁, P₂ und P₃ angedeutet. Bedeutet beispielsweise Zustand P₁ daß das System optimale Performance liefert, Zustand P₂ daß die Performance des Systems nicht optimal ist und Zustand P₃ daß keine Funktion des Systems möglich ist, so kann Übergang 18 beispielsweise durch starken Schneefall entstehen, wodurch sich der Sensor leicht zusetzt. Übergang 20 kann zum Beispiel dadurch entstehen, daß das eigene Fahrzeug in der Schneegischt eines vorausfahrenden Fahrzeuges fährt. Hierbei kann sich der zuvor schon verschmutzte Sensor bis zur Blindheit weiter zusetzen. Übergang 19 kann zum Beispiel durch hochgeschleuderten Schneematsch entstehen wenn sich der zuvor noch freie Sensor sofort und unmittelbar zusetzt. Auch innerhalb der Übergangszustände 18, 19 und 20 muß stets die vorherrschende Fahrsituation (Fₙ) berücksichtigt werden, da die Verwendbarkeit der einzelnen Indikatoren (Iₙ) und/oder der Übergangszustände stark davon abhängt, welche Situation auf der Straße beziehungsweise in der Umgebung vorherrscht. Es liegt im Rahmen der vorliegenden Erfindung mögliche Übergangszustände ebenfalls in eine Auswertung mit einzubeziehen.

Figur 4 zeigt eine Möglichkeit, wie der bestimmte Zustand (P) des Systems in eine Steuerung einfließen kann, die eine Reinigungseinrichtung 23 für den Sensor ansteuert. Ein zuvor bestimmter Zustand des Sensors (P) 14 wird hierbei an eine Steuerung 21 übermittelt. Im allgemeinen erhält die Steuerung 21 weitere Signale 22, die zur Steuerung einer Reinigungseinrichtung notwendig sind. Von der Steuerung 21 wird dann entsprechend eine Reinigungseinrichtung 23 angesteuert. Die Reinigungseinrichtung 23 kann dabei eine mit Wasser arbeitende Vorrichtung, eine mechanische Reinigungsvorrichtung oder eine Heizung für den Sensor sein. Bei einer Heizung ist es beispielsweise in der Regel so, daß die Heizung unterhalb einer bestimmten Temperaturschwelle aktiviert wird. Aufgrund von bestimmten Wetter- und/oder Umgebungssituationen kann es nun beispielsweise sein, daß ein verschmutzter Zustand (P) des Sensors bestimmt wird, die Umgebungstemperatur sich jedoch noch oberhalb der Temperaturschwelle befindet und in diesem Falle normalerweise keine Ansteuerung der Heizung erfolgt wäre. Durch den bestimmten Zustand (P), der auf eine Verschmutzung des Sensors hinweist, kann somit frühzeitig eine Ansteuerung der Heizung vorgenommen werden, um der Verschmutzung entgegenzuwirken.

## Patentansprüche

1. Verfahren zur Zustandserkennung bei einem System zur automatischen Längs- und/oder Querregelung bei einem Kraftfahrzeug, arbeitend nach dem Radarprinzip und/oder dem Lidarprinzip, zur Verschmutzungsund/oder Blindheitserkennung eines Sensors, wobei die Zustandserkennung von wenigstens zwei Indikatoren (Iₙ) abhängig ist, die aus den von dem Sensor empfangenen und/oder ausgesendeten Signalen gebildet werden, **dadurch gekennzeichnet, daß** die wenigstens zwei Indikatoren (Iₙ) mit Wichtungsfaktoren (aₙ) gewichtet werden.

2. Verfahren zur Zustandserkennung nach Anspruch 1,
**dadurch gekennzeichnet,**
**daß** die gewichteten Indikatoren miteinander verknüpft werden.

3. Verfahren zur Zustandserkennung nach Anspruch 1,
**dadurch gekennzeichnet,**
**daß** die Summe der Wichtungsfaktoren (aₙ) nicht größer als eins ist.

4. Verfahren zur Zustandserkennung nach einem der Ansprüche von 1 bis 3,
**dadurch gekennzeichnet,**
**daß** die Wichtungsfaktoren (aₙ) wenigstens von einer Fahrsituation (Fₙ) und/oder von einer zu bestimmenden Wahrscheinlichkeit (Vₙ) abhängig sind.

5. Verfahren zur Zustandserkennung nach Anspruch 4,
**dadurch gekennzeichnet,**
**daß** als Fahrsituation (Fₙ) wenigstens eine der folgenden Fahrsituationen (Fₙ) berücksichtigt wird:
- Das System detektiert ein anderes Kraftfahrzeug, das als Zielobjekt für eine Regelung verwendet wird;
- Das System detektiert kein mögliches Zielobjekt, aber andere bewegte Objekte;
- Das System detektiert weder ein mögliches Zielobjekt noch andere bewegte Objekte.

6. Verfahren zur Zustandserkennung nach Anspruch 4,
**dadurch gekennzeichnet,**
**daß** als zu bestimmende Wahrscheinlichkeit (Vₙ) wenigstens eine der folgenden Wahrscheinlichkeiten (Vₙ) ausgewählt wird:
- Das System liefert optimale Performance;
- Die Performance des Systems ist nicht optimal;
- Es ist keine Funktion des Systems möglich.

7. Verfahren zur Zustandserkennung nach einem der Ansprüche von 1 bis 6,
**dadurch gekennzeichnet,**
**daß** die verknüpften Indikatoren wenigstens eine Wahrscheinlichkeit (Vₙ) ergeben, die eine Aussage über den wahrscheinlichen Zustand (P) des Systems macht.

8. Verfahren zur Zustandserkennung nach Anspruch 7,
**dadurch gekennzeichnet,**
**daß** die größte der Wahrscheinlichkeiten (Vₙ) den Zustand (P) des Systems beschreibt.

9. Verfahren zur Zustandserkennung nach einem der Ansprüche von 1 bis 8,
**dadurch gekennzeichnet,**
**daß** die Indikatoren (Iₙ) so normiert werden, daß sich der mögliche Wertebereich zwischen null und eins bewegt.

10. Verfahren zur Zustandserkennung nach einem der Ansprüche von 1 bis 9,
**dadurch gekennzeichnet,**
**daß** wenigstens einer der folgenden Indikatoren (Iₙ) verwendet wird:
- Die mittlere Winkelgüte aller von dem System detektierten Objekte, die eine Aussage über die Qualität der bestimmten Objektwinkel macht;
- Die Objektstabilität, die die Rate von Detektionsausfällen des für die Fahrzeuglängsregelung ausgewählten Ziel- bzw. Regelobjekts beschreibt;
- Die mittlere Leistung der von dem Sensor empfangenen Signale;
- Die Summe aller von dem System während einer Messung detektierten Objekte;
- Die Verknüpfung von Abstand und Amplitude des am weitesten entfernt detektierten Objekts;
- Die vom System detektierten Straßenreflexionen.

11. Verfahren zur Zustandserkennung nach Anspruch 7 oder 8,
**dadurch gekennzeichnet,**
**daß** ein Zustand (P) erst dann als bestimmt angenommen wird, wenn sich das Ergebnis der verknüpften Indikatoren wenigstens für eine vorbestimmte Zeitdauer (T) ergibt.

12. Verfahren zur Zustandserkennung nach einem der Ansprüche von 6 bis 11,
**dadurch gekennzeichnet,**
**daß** es zwischen den Wahrscheinlichkeiten (Vₙ) und/oder den Zuständen (P) Übergangszustände gibt, die ebenfalls zur Auswertung herangezogen werden.

13. Verfahren zur Zustandserkennung nach Anspruch 8 oder Ansprush 10,
**dadurch gekennzeichnet,**
**daß** der bestimmte Zustand (P) des Systems in eine Steuerung einfließt, die eine Reinigungseinrichtung für den Sensor ansteuert.

14. Verfahren zur Zustandserkennung nach Anspruch 13,
**dadurch gekennzeichnet,**
**daß** die Reinigungseinrichtung wenigstens eine mit Wasser arbeitende Vorrichtung, eine mechanische Reinigungsvorrichtung oder eine Heizung für den Sensor ist.

15. Vorrichtung zur Zustandserkennung bei einem System zur automatischen Längs- und/oder Querregelung bei einem Kraftfahrzeug, arbeitend nach dem Radarprinzip und/oder dem Lidarprinzip, zur Verschmutzungsund/oder Blindheitserkennung eines Sensors, wobei Mittel vorhanden sind, die die Zustandserkennung wenigstens unter Berücksichtigung von zwei Indikatoren (Iₙ) durchführen, die von weiteren Mitteln aus den von dem Sensor empfangenen und/oder ausgesendeten Signalen gebildet werden, **dadurch gekennzeichnet, daß** Mittel vorgesehen sind, um die wenigstens zwei Indikatoren (Iₙ) mit Wichtungsfaktoren (aₙ) zu wichten.

## Claims

1. Method for detecting states in a system for automatic longitudinal and/or lateral control in a motor vehicle, operating according to the radar principle and/or the lidar principle, for detecting soiling and/or blindness of a sensor, the detection of states being dependent on at least two indicators (Iₙ) which are formed from the signals which are received and/or emitted by the sensor, **characterized in that** the at least two indicators (Iₙ) are weighted with weighting factors (aₙ).

2. Method for detecting states according to Claim 1, **characterized in that** the weighted indicators are logically linked to one another.

3. Method for detecting states according to Claim 1, **characterized in that** the sum of the weighting factors (aₙ) is not greater than one.

4. Method for detecting states according to one of Claims 1 to 3, **characterized in that** the weighting factors (aₙ) are dependent at least on a driving situation (Fₙ) and/or on a probability (Vₙ) to be determined.

5. Method for detecting states according to Claim 4, **characterized in that** at least one of the following driving situations (Fₙ) is taken into account as driving situation (Fₙ) :
- the system detects another motor vehicle which is used as a target object for a regulating operation;
- the system does not detect any possible target object but instead other moving objects;
- the system detects neither a possible target object nor other moving objects.

6. Method for detecting states according to Claim 4, **characterized in that** at least one of the following probabilities (Vₙ) is selected as a probability (Vₙ) to be determined:
- the system supplies optimum performance;
- the performance of the system is not at an optimum;
- it is not possible for the system to function.

7. Method for detecting states according to one of Claims 1 to 6, **characterized in that** the logically linked indicators indicate at least one probability (Vₙ) which permits conclusions to be drawn about the probable state (P) of the system.

8. Method for detecting states according to Claim 7, **characterized in that** the greatest of the probabilities (Vₙ) describes the state (P) of the system.

9. Method for detecting states according to one of Claims 1 to 8, **characterized in that** the indicators (Iₙ) are standardized in such a way that the possible value range extends between zero and one.

10. Method for detecting states according to one of Claims 1 to 9, **characterized in that** at least one of the following indicators (Iₙ) is used:
- the average angular quality of all the objects detected by the system, said angular quality permitting conclusions to be drawn about the quality of the specific object angles;
- the object stability which describes the rate of detection failures of the target object or regulated object which is selected for the longitudinal control of the vehicle;
- the average power of the signals received by the sensor;
- the sum of all the objects detected by the system during a measurement;
- the logic linking of state and amplitude of the most remote detected object;
- the road reflections detected by the system.

11. Method for detecting states according to Claim 7 or 8, **characterized in that** a state (P) is not assumed to be determined until the result of the logically linked indicators is obtained at least for a predetermined time period (T).

12. Method for detecting states according to one of Claims 6 to 11, **characterized in that** between the probabilities (Vₙ) and/or the states (P) there are transition states which are also used for evaluation.

13. Method for detecting states according to Claim 8 or Claim 10, **characterized in that** the specific state (P) of the system is fed into a controller which actuates a cleaning device for the sensor.

14. Method for detecting states according to Claim 13, **characterized in that** the cleaning device is at least one apparatus which operates with water, a mechanical cleaning apparatus or a heater for the sensor.

15. Apparatus for detecting states in a system for automatic longitudinal and/or lateral control in a motor vehicle, operating according to the radar principle and/or the lidar principle, for detecting soiling and/or blindness of a sensor, means being provided which carry out the detection of states at least taking into account two indicators (Iₙ) which are formed by further means from the signals which are received and/or emitted by the sensor, **characterized in that** means are provided for weighting the at least two indicators (Iₙ) with weighting factors (aₙ).

## Revendications

1. Procédé de reconnaissance d'état pour un système de régulation longitudinale et/ou transversale automatique pour un véhicule, fonctionnant selon le principe du radar et/ou du lidar, destiné à reconnaître l'encrassement ou la cécité d'un détecteur, la reconnaissance d'état dépendant d'au moins deux indicateurs (Iₙ) formés par les signaux reçus et/ou émis par le détecteur,
**caractérisé en ce que**
les indicateurs (Iₙ) au moins au nombre de deux sont pondérés avec des facteurs de pondération (aₙ).

2. Procédé de reconnaissance d'état selon la revendication 1,
**caractérisé en ce que**
les indicateurs pondérés sont combinés les uns aux autres.

3. Procédé de reconnaissance d'état selon la revendication 1,
**caractérisé en ce que**
la somme des facteurs de pondération (aₙ) n'est pas supérieure à un.

4. Procédé de reconnaissance d'état selon l'une des revendications 1 à 3,
**caractérisé en ce que**
les facteurs de pondération (aₙ) dépendent d'au moins une situation de conduite (Fₙ) et/ou d'une probabilité (Vₙ) à déterminer.

5. Procédé de reconnaissance d'état selon la revendication 4,
**caractérisé en ce que**
l'on tient compte d'au moins l'une des situations de conduite (Fₙ) suivantes en tant que situation de conduite (Fₙ) :
- le système détecte un autre véhicule automobile qui est utilisé en tant qu'objet cible pour un réglage ;
- le système ne détecte pas d'objet cible possible mais d'autres objets mobiles ;
- le système ne détecte ni objet cible possible ni d'autres objets mobiles.

6. Procédé de reconnaissance d'état selon la revendication 4,
**caractérisé en ce que**
l'une des probabilités (Vₙ) suivantes est choisie en tant que probabilité (Vₙ) à déterminer :
- le système fournit une performance optimale ;
- la performance du système n'est pas optimale ;
- aucun fonctionnement du système n'est possible.

7. Procédé de reconnaissance d'état selon l'une des revendications 1 à 6,
**caractérisé en ce que**
les indicateurs combinés donnent au moins une probabilité (Vₙ) qui fait une prédiction sur l'état (P) probable du système.

8. Procédé de reconnaissance d'état selon la revendication 7,
**caractérisé en ce que**
la probabilité (Vₙ) la plus élevée décrit l'état (P) du système.

9. Procédé de reconnaissance d'état selon l'une des revendications 1 à 8,
**caractérisé en ce que**
les indicateurs (Iₙ) sont encadrés de telle manière que la gamme des valeurs possibles varie entre zéro et un.

10. Procédé de reconnaissance d'état selon l'une des revendications 1 à 9,
**caractérisé en ce que**
l'on utilise au moins l'un des indicateurs (Iₙ) suivants :
- le facteur qualité angulaire moyen de tous les objets détectés par le système, lequel fait une prédiction sur la qualité de l'angle déterminé de l'objet ;
- la stabilité de l'objet laquelle décrit le taux de défaillances de détection de l'objet cible ou de l'objet régulateur choisi pour la régulation longitudinale du véhicule ;
- la puissance moyenne des signaux reçus par le détecteur ;
- la somme de tous les objets détectés par le système pendant une mesure ;
- la combinaison de l'écart et de l'amplitude de l'objet détecté le plus éloigné ;
- les réflexions de chaussée détectées par le système.

11. Procédé de reconnaissance d'état selon la revendication 7 ou 8,
**caractérisé en ce qu'**
un état (P) n'est considéré comme établi que lorsqu'on a le résultat des indicateurs combinés au moins pour une période (T) prédéfinie.

12. Procédé de reconnaissance d'état selon l'une des revendications 6 à 11,
**caractérisé en ce qu'**
il existe entre les probabilités (Vₙ) et/ou les états (P) des états de transition dont on tient également compte pour l'interprétation.

13. Procédé de reconnaissance d'état selon la revendication 8 ou 10,
**caractérisé en ce que**
l'état (P) déterminé du système entre dans une commande qui déclenche une installation de nettoyage pour le détecteur.

14. Procédé de reconnaissance d'état selon la revendication 13,
**caractérisé en ce que**
l'installation de nettoyage est au moins un dispositif qui fonctionne avec de l'eau, un dispositif de nettoyage mécanique ou un chauffage pour le détecteur.

15. Dispositif de reconnaissance d'état pour un système de régulation longitudinale et/ou transversale automatique pour un véhicule, fonctionnant selon le principe du radar et/ou du lidar, destiné à reconnaître l'encrassement ou la cécité d'un détecteur, et comportant des moyens qui exécutent la reconnaissance d'état au moins en tenant compte de deux indicateurs (Iₙ) formés par d'autres moyens à partir des signaux émis et/ou reçus par le détecteur,
**caractérisé par**
des moyens prévus pour pondérer les indicateurs (Iₙ) au moins au nombre de deux, avec des facteurs de pondération (aₙ).
